(19) Europäisches Patentamt
European Patent Office
Office européen des brevets

(11) **EP 1 167 143 B1**

(12) **EUROPÄISCHE PATENTSCHRIFT**

(45) Veröffentlichungstag und Bekanntmachung des Hinweises auf die Patenterteilung:
**01.12.2010 Patentblatt 2010/48**

(51) Int Cl.:
***B60T 8/17*** *(2006.01)*

(21) Anmeldenummer: **01113777.5**

(22) Anmeldetag: **06.06.2001**

(54) **Verfahren und Vorrichtung zur Erkennung einer Panikbremsung**

Method and device for emergency braking detection

Procédé et appareil pour la détection d'un freinage de panique

(84) Benannte Vertragsstaaten:
**DE ES GB SE**

(30) Priorität: **07.09.2000 DE 10044121**
**30.06.2000 DE 10031125**

(43) Veröffentlichungstag der Anmeldung:
**02.01.2002 Patentblatt 2002/01**

(73) Patentinhaber: **ROBERT BOSCH GMBH**
**70442 Stuttgart (DE)**

(72) Erfinder:
• **Ullmann, Steffen**
**70186 Stuttgart (DE)**
• **Poggenburg, Ruediger**
**71665 Vaihingen/enz (DE)**
• **Opferkuch, Thomas**
**20149 Mailand (IT)**
• **Diehle, Stefan**
**70825 Korntal-Muenchingen (DE)**

(56) Entgegenhaltungen:
**DE-A- 19 524 939     DE-A- 19 936 436**
**US-A- 4 398 260**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Stand der Technik

Die Erfindung betrifft ein Verfahren und eine Vorrichtung zur Erkennung einer Panikbremsung mit den Merkmalen der unabhängigen Ansprüche.

Unter einer Panikbremsung versteht man im Allgemeinen, dass der Fahrer des Fahrzeugs das Bremspedal schnell und stark betätigt. Aus dem Stand der Technik sind Systeme zur Erkennung einer Panikbremsung bekannt. So ist beispielsweise aus der DE 195 24 939 A eine Steuerung für eine Bremsanlage bekannt, bei der in bestimmten Betriebssituationen, die auf der Basis des Fahrerbremswunsches erkannt werden, Bremskraft über die eigentliche Fahrervorgabe hinaus auf die Radbremsen aufgebracht wird. Eine dieser Betriebssituationen ist eine Situation, in der aus der Reaktion des Fahrers auf eine Gefahrensituation geschlossen werden kann (Panikbremsung). Um diese Situation zu erkennen, wird die Art und Weise, wie der Fahrer das Bremsbetätigungselement betätigt, ausgewertet. Betätigt er das Element sehr schnell, was beispielsweise anhand der Änderung des Vordrucks der Bremsanlage erkannt wird, wird Druck über die Fahrervorgabe hinaus aufgebaut. Überschreitet die ausgewertete Größe einen vorgegebenen Schwellenwert (Auslöseschwelle), so findet der automatische Bremsvorgang, d.h. der erhöhte Bremskraftaufbau statt. Die Auslöseschwelle wird dabei auf der Basis vorgegebener Betriebsgrößen verändert, wobei die Auslöseschwelle erniedrigt wird, das heißt die Auslösung des erhöhten Bremskraftaufbaus empfindlicher gestaltet wird, wenn das Gefahrenpotential zunimmt. Als Betriebsgrößen sind dabei genannt der Vordruck der Bremsanlage, die Fahrzeuggeschwindigkeit, die Fahrzeugdrehrate, die Querbeschleunigung des Fahrzeugs, die Längsbeschleunigung des Fahrzeugs, die Lenkwinkeländerung, die abgegebene Motorleistung und/oder die Bremsdruckanforderung eines Fahrdynamikreglers.

Solche aus dem Stand der Technik bekannte Systeme benötigen zur Erkennung einer Panikbremsung eine relativ aufwendige und damit teuere Zusatzsensorik wie beispielsweise Bremspedalwegaufnehmer, Längsbeschleunigungssensoren oder Gierratensensoren.

Das Dokument US 4398260 offenbart ein Verfahren sowie eine Vorrichtung gemäß dem Oberbegriff der unabhängigen Ansprüche 1 und 8.

Vorteile der Erfindung

Erfindungsgemäß geschieht die Erkennung einer Panikbremsung bei einem Kraftfahrzeug mit wenigstens zwei Rädern dadurch, dass

- Drehzahlgrößen erfasst werden, die die Drehbewegungen wenigstens zweier Räder repräsentieren,
- die Drehzahlgröße eines der Räder ausgewählt wird und/oder aus den Drehzahlgrößen ein Drehzahlwert ermittelt wird,
- ein die zeitliche Änderung der ausgewählten Drehzahlgröße und/oder des Drehzahlwertes repräsentierender Änderungswert ermittelt wird,
- der zeitliche Verlauf des Änderungswertes ermittelt wird,
- abhängig von dem zeitlichen Verlauf des Änderungswertes eine Panikbremsung erkannt wird, wobei der zeitliche Verlauf des Änderungswertes, abhängig von dem erfindungsgemäß eine Panikbremsung erkannt wird, derart ermittelt werden kann, dass der Änderungswert, also die negative Radbeschleunigung des ausgewählten Rades, mit einem ersten Schwellenwert verglichen wird. Eine Panikbremsung wird dann erkannt, wenn der Änderungswert innerhalb einer vorgebbaren ersten Zeitdauer nach dem Unterschreiten des ersten Schwellwertes weiterhin einen zweiten Schwellenwert unterschreitet. Der erste Schwellenwert ist dabei größer als der zweite Schwellenwert.

Die Erfindung hat den Vorteil, dass zur zuverlässigeren Erkennung einer Panikbremsung keine aufwendige und teuere Zusatzsensorik notwendig ist; es genügen die ohnehin bei Antiblockierregelsystemen, Antriebsschlupfregelsystemen und/oder Fahrstabilitätssystemen vorgesehenen Raddrehzahlsensoren. Der Einsatz einer Panikerkennung ist damit auch in sogenannten Low-Cost-Bremsanlagen möglich.

Durch die Erkennung einer Panikbremsung ist im Falle einer Panikbremsung eine Warnung des nachfolgenden Verkehrs möglich. Hier ist beispielsweise daran gedacht, in Reaktion auf eine erkannte Panikbremsung die Warnblinkanlage zu aktivieren.

Weiterhin kann vorgesehen sein, dass das Erkennen einer Panikbremsung durch Abstandsregelsystemen (ACC-Systemen, Automatic Cruise Control) übermittelt werden, so dass nachfolgende Fahrzeuge ebenfalls stark abgebremst werden.

Durch die Erkennung einer Panikbremsung sind Stabilitätsverbesserung durch ein empfindliches Anregeln der Bremsdrucke an den Rädern der Hinter- und/oder der Vorderachse möglich. Hierdurch werden allzu große Radeinläufe bei Radinstabilitäten vermieden.

Weiterhin kann vorgesehen sein, dass in Reaktion auf eine erkannte Panikbremsung der Bremsdruck an den hinteren Rädern begrenzt wird. Diese Begrenzung kann solange aufrecht erhalten werden, bis eine Antiblockierregelung und/oder eine Bremskraftverteilungsregelung an den hinteren Rädern aktiviert wird oder eine vorgebbare zweite Zeitdauer überschritten wird oder eine vorgebbare Fahrzeugmindestverzögerung unterschritten wird. Durch diese Gradientenbegrenzung des Druckanstiegs in den Radbremsen wird eine Bremswegverbesserung erzielt, da damit der Bremsdrucküberschuß nicht übermäßig über dem Blockierdruckniveau liegt. Dadurch bedingt kann der nachfolgende Bremsdruckabbau klein gehalten werden. Auch kann eine starke hydraulische Drosselung der Bremswirkung an den Radbremsen der Hinterachse, die zu einem unbefriedigenden Bremspedalgefühl führt, reduziert werden bzw. entfallen.

In einer vorteilhaften Ausgestaltung der Erfindung ist vorgesehen, dass die Drehzahlgröße eines der Räder derart ausgewählt wird, dass als ausgewählte Drehzahlgröße die Drehzahlgröße des Rades, das die geringste Drehgeschwindigkeit aufweist, ausgewählt wird. Es wird also als Bezugsrad das langsamste Rad herangezogen. Alternativ oder ergänzend hierzu kann der Drehzahlwert durch eine, unter Umständen gewichtete, Mittelwertbildung aus den Drehzahlgrößen wenigstens zweier Räder ermittelt werden.

Weiterhin kann vorgesehen sein, dass die Drehzahlgrößen auf Fehler hin überprüft werden und die Drehzahlgrößen der Räder, an denen ein Fehler detektiert worden ist, von der Auswahl der Drehzahlgröße und/oder von der Ermittlung des Drehzahlwertes ausgeschlossen werden.

Es kann auch erkannt werden, wenn das Fahrzeug eine Fahrbahn mit Unebenheiten vorgebbaren Ausmaßes befährt (Schlechtwegerkennung). Liegt ein solcher Schlechtweg vor, so wird die Erkennung der Panikbremsung deaktiviert.

Darüber hinaus ist es vorteilhaft, dass zur Auswahl der ausgewählten Drehzahlgröße, also des Bezugsrades, beziehungsweise zur Ermittlung des Drehzahlwertes nur nicht angetriebene Räder herangezogen werden. Hierdurch wird der Einfluß eines Motorschleppmomentes, insbesondere auf Fahrbahnen mit niedrigem Reibwert, ausgeschlossen.

Um die Erkennung der Panikbremsung sicherer zu machen, kann vorgesehen sein, dass die Betätigung des Bremspedals durch ein Bremssignal erfasst werden. Dies kann beispielsweise durch den Bremslichtschalter geschehen. In dieser Ausgestaltung wird nur dann eine Panikbremsung erkannt, wenn das Bremssignal eine Betätigung des Bremspedals anzeigt.

Alternativ oder ergänzend kann vorgesehen sein, dass eine die Verzögerung des gesamten Fahrzeugs repräsentierende Verzögerungsgröße ermittelt wird. Gemäß dieser Ausgestaltung wird nur dann eine Panikbremsung erkannt, wenn die Verzögerungsgröße im zeitlichen Verlauf größer wird.

Weitere vorteilhafte Ausgestaltungen der Erfindung sind den Unteransprüchen zu entnehmen.

Zeichnung

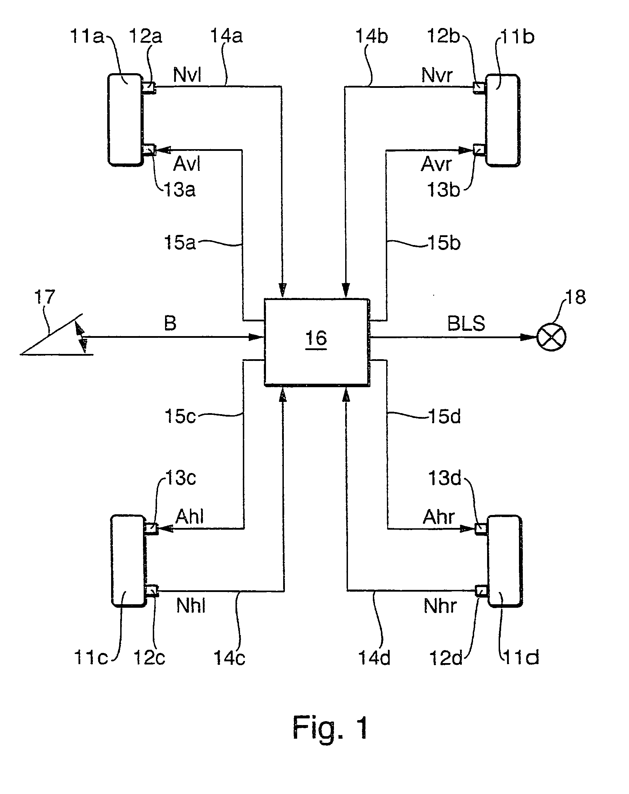

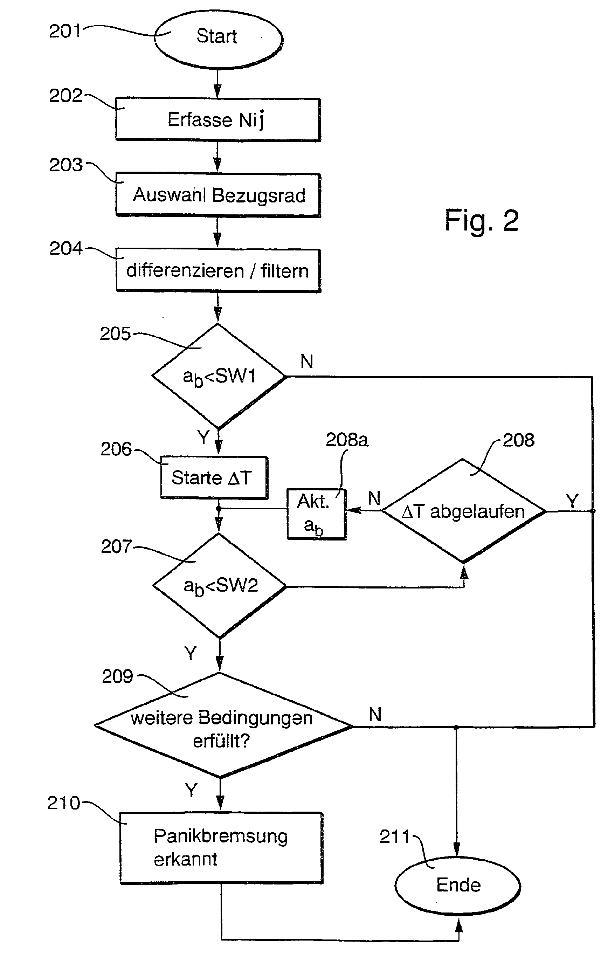

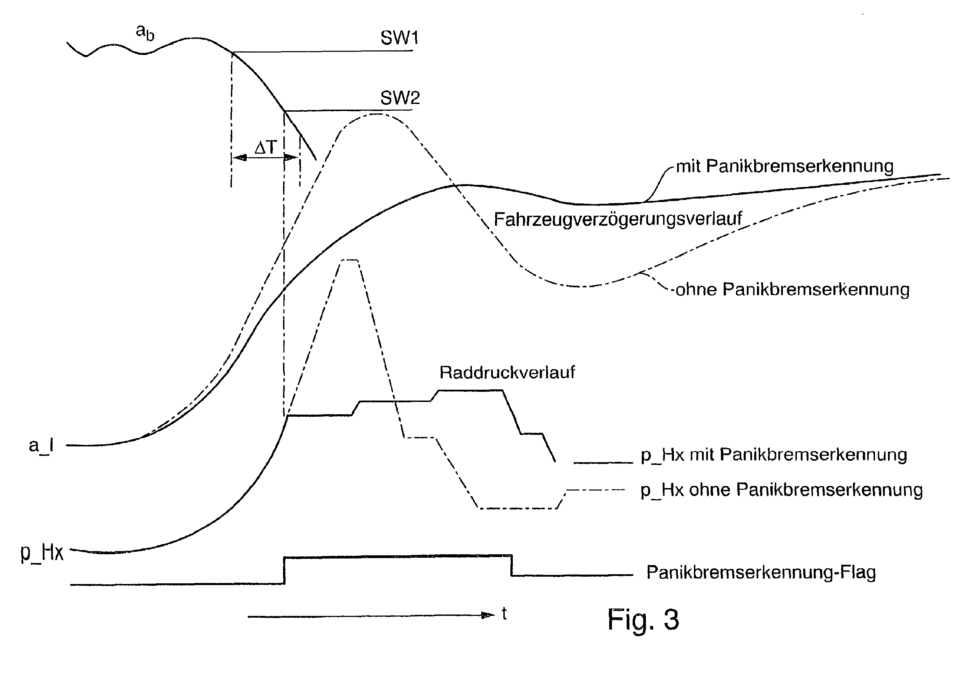

Die Figur 1 zeigt schematisch das Bremssystem eines Fahrzeugs. Die Figur 2 stellt das Ausführungsbeispiel anhand eines Ablaufdiagramms dar, während in der Figur 3 zeitliche Verläufe zu sehen sind.

Ausführungsbeispiel

Die Erfindung wird im folgenden anhand eines Ausführungsbeispiels dargestellt. Die Figur 1 zeigt mit dem Bezugszeichen 11a bis d vier Räder eines zweiachsigen Fahrzeugs, wobei jedes Rad einen mit dem Bezugszeichen 12a bis d gekennzeichneten Raddrehzahlsensor aufweist. Die Raddrehzahlen Nij werden der Auswerteeinheit 16 zugeführt. Der Index i bezeichnet dabei die Zugehörigkeit der entsprechenden Größe zur Vorder-(i = v) bzw. zur Hinterachse (i = h). Der Index j repräsentiert die Zugehörigkeit der entsprechenden Größe zur rechten (j = r) bzw. zur linken (j = l) Fahrzeugseite.

Jedem Rad 11a bis d sind Radbremsen 13a bis d zugeordnet, deren Bremskraft bzw. Bremswirkung durch die Leitungen 15a bis d von der Auswerteeinheit 16 gesteuert wird. Hierzu dienen die Ansteuersignale Aij.

Mit dem Bezugszeichen 17 ist das vom Fahrer betätigbare Bremspedal dargestellt. Die Stellung des Bremspedals 17 wird erfasst und als Signal B der Auswerteeinheit 16 zugeführt. Liegt ein Bremsvorgang vor, so werden durch das Signal BLS die Bremslichter 18 angesteuert.

Erfindungsgemäß wird ein steiles Anbremsen (schnelle und starke Betätigung des Bremspedals 17) bzw. eine Panikbremsung anhand der Radreaktion erfasst. Hierzu ist in der Figur 2 ist ein Ablaufdiagramm zu sehen.

Nach dem Startschritt 201 werden im Schritt 202 die Raddrehzahlen Nij eingelesen. Im Schritt 203 wird ein Bezugsrad ausgewählt. Um eine möglichst schnelle Erkennung zu gewährleisten, wird jeweils das langsamste Rad außerhalb einer Antiblockierregelung des Fahrzeugs ausgewählt. Dabei werden Räder mit Drehzahlfühlerfehler, Plausibilitätsfehler, Einstreuung oder stehende Räder bei der Auswahl des langsamsten Rades nicht berücksichtigt. Hierzu kann auf die in Antiblockiersystemen im Allgemeinen vorhandene Sicherheitslogik zurückgegriffen werden. Ebenfalls wird die Panikbremserkennung nicht aktiviert bei erkanntem Schlechtweg oder Fahrbahnschwellen, wo ein ähnlicher Radverlauf wie bei einer Panikbremsung zustande kommen kann. Bei der Schlechtwegerkennung kann ebenfalls auf eine in der Regel im Antiblockiersystem vorhandene Schlechtwegkennung zurückgegriffen werden.

Alternativ oder ergänzend hierzu kann die Geschwindigkeitsauswahl auf die Nichtantriebsachse begrenzt werden. Damit wird der Einfluß von Motorschleppmoment, insbesondere auf Fahrbahnen mit einem niedrigen Reibwert, zusätzlich ausgeschlossen.

Im folgenden Schritt 204 wird Geschwindigkeit $N_b$ des nach obigen Verfahren ausgewählten Rades differenziert gemäß

$$a_b = dN_b/dt.$$

Um leichte Radstörungen auszugleichen kann die so gewonnene Verzögerung PT1-gefiltert werden. Der Filterzeitparameter ist dabei applizierbar.

Im Schritt 205 wird die (unter Umständen gefilterte) Radbeschleunigung $a_b$ mit dem Schwellenwert SW1 verglichen. Im Bremsfall ist der Wert $a_b$ der Radbeschleunigung negativ (Radverzögerung). Ebenso ist der Schwellenwert SW1 (Verzögerungstriggerschwelle) negativ.

Unterschreitet die Radbeschleunigung $a_b$ den SW1 nicht, so wird zum Endschritt 211 gegangen, da keine signifikant große Radverzögerung vorliegt.

Bei Erreichen der Verzögerungstriggerschwelle SW1 (beispielsweise -1m/s$^2$), also bei einem Unterschreiten von SW1, wird der Zeitzähler $\Delta T$ im Schritt 206 gestartet.

Wird innerhalb des applizierbaren Zeitfensters $\Delta T$ (beispielsweise 50ms, Schritt 208) auch der zweite Schwellenwert SW2 (beispielsweise -3m/s$^2$) unterschritten (Schritt 207), so wird zum Schritt 209 übergegangen. Im Schritt 208a wird die Radbeschleunigung $a_b$ aktualisiert. Wird die Fahrzeugverzögerungsschwelle SW2 [z.B. -3m/s$^2$] nicht erreicht oder erst nach Ablauf des Zeitfensters $\Delta T$ (z.B. 50ms), wird zum Endschritt 211 gegangen.

Im Schritt 209 können noch weitere Bedingungen überprüft werden, ehe im Schritt 210 eine Panikbremsung erkannt wird. So können beispielsweise im Schritt 209 zusätzliche Plausibiliätsprüfungen stattfinden, wie z.B., ob der Bremslichtschalter (Signal BLS) betätigt ist (Fahrer steht auf der Bremse) und/oder die Gesamtfahrzeugverzögerung ebenfalls von Programmzyklus zu Programmzyklus größer wird.

In der Figur 3 sind die zeitlichen Verläufe verschiedener Größen beispielhaft aufgezeigt. Links oben ist zunächst der Verlauf der zeitlichen Änderung $a_b$ der Radgeschwindigkeit des Bezugsrades im Falle einer Panikbremsung sowie die Schwellenwerte SW1 und SW2 zu sehen.

Weiterhin sind der Verlauf der Fahrzeugverzögerung a_1, der Bremsdruckverlauf p_Hx an einer Hinterradbremse mit und ohne Panikbremserkennung sowie das Panikbremserkennung-Flag zu sehen.

Hat der Wert $a_b$ innerhalb der Zeit $\Delta T$ den Schwellenwert SW2 unterschritten, so wird das Panikbremserkennung-Flag gesetzt (Schritt 210).

Wird nun im Schritt 210 eine Panikbremsung erkannt, so wird eine einstellbare, beispielsweise sehr flache, Pulsreihe zur Raddruckgradientenbegrenzung (Ventilbetätigung ABS-Hydraulik) an den Radbremsen der Hinterachse gestartet (siehe Raddruckverlauf in der Figur 3). Diese Gradientenbegrenzung läuft so lange, bis eine ABS-Regelung oder eine EBV-Regelung (elektrische Bremskraftverteilung) an der Hinterachse die Druckmodulation übernimmt, oder bis eine Fahrzeugmindestverzögerung (z.B. -2m/s$^2$) unterschritten oder eine maximale Aufbauzeit z.B. (200ms) überschritten wurde.

Ferner kann für eine applizierbare Zeit die Panikbremsung dem nachfolgenden Verkehr angezeigt werden, indem beispielsweise die Warnblinkanlage angesteuert wird.

**Patentansprüche**

1. Verfahren zur Erkennung einer Panikbremsung bei einem Kraftfahrzeug mit wenigstens zwei Rädern, wobei

- Drehzahlgrößen (Nij) erfasst werden, die die Drehbewegungen wenigstens zweier Räder repräsentieren,
- die Drehzahlgröße ($N_b$) eines der Räder ausgewählt wird und/oder aus den Drehzahlgrößen ein Drehzahlwert ermittelt wird,
- ein die zeitliche Änderung der ausgewählten Drehzahlgröße und/oder des Drehzahlwertes repräsentierender Änderungswert ($a_b$) ermittelt wird,
- der zeitliche Verlauf des Änderungswertes ermittelt wird,
- abhängig von dem zeitlichen Verlauf des Änderungswertes ($a_b$) eine Panikbremsung erkannt wird,
- der Änderungswert ($a_b$) mit einem ersten Schwellenwert (SW1) verglichen wird,

**dadurch gekennzeichnet, dass**

- eine Panikbremsung dann erkannt wird, wenn der Änderungswert ($a_b$) innerhalb einer vorgebbaren ersten Zeitdauer ($\Delta T$) nach dem Unterschreiten des ersten Schwellwertes einen zweiten Schwellenwert (SW2) unterschreitet, wobei der erste Schwellenwert (SW1) größer als der zweite Schwellenwert (SW2) ist.

2. Verfahren nach Anspruch 1, **dadurch gekennzeichnet, dass** die Drehzahlgröße eines der Räder derart ausgewählt wird,

- dass als ausgewählte Drehzahlgröße ($N_b$) die Drehzahlgröße des Rades, das die geringste Drehgeschwindigkeit aufweist, ausgewählt wird, und/oder
- dass der Drehzahlwert durch eine Mittelwertbildung aus den Drehzahlgrößen wenigstens zweier Räder ermittelt wird.

3. Verfahren nach Anspruch 1, **dadurch gekennzeichnet, dass** die Drehzahlgrößen auf Fehler hin überprüft werden und die Drehzahlgrößen der Räder, an denen ein Fehler detektiert worden ist, von der Auswahl der Drehzahlgröße und/oder von der Ermittlung des Drehzahlwertes ausgeschlossen werden.

4. Verfahren nach Anspruch 1, **dadurch gekenn-**

**zeichnet, dass** erkannt wird, wenn das Fahrzeug eine Fahrbahn mit Unebenheiten vorgebbaren Ausmaßes befährt und die Erkennung der Panikbremsung bei einer Erkennung des Befahrens einer solchen Fahrbahn deaktiviert wird.

5. Verfahren nach Anspruch 1, **dadurch gekennzeichnet, dass** das Fahrzeug von einem Motor aufweist und wenigstens ein Rad durch den Motor angetrieben wird und zur Auswahl der ausgewählten Drehzahlgröße ($N_b$) und/oder zur Ermittlung des Drehzahlwertes nur nicht angetriebene Räder herangezogen werden.

6. Verfahren nach Anspruch 1, **dadurch gekennzeichnet, dass**

- das Fahrzeugs ein vom Fahrer betätigbares Bremspedal aufweist und die ein die Betätigung des Bremspedals repräsentierendes Bremssignal (BLS) erfasst wird und nur dann eine Panikbremsung erkannt wird, wenn das Bremssignal eine Betätigung des Bremspedals anzeigt, und/oder
- eine die Verzögerung des gesamten Fahrzeugs repräsentierende Verzögerungsgröße ermittelt wird und nur dann eine Panikbremsung erkannt wird, wenn die Verzögerungsgröße im zeitlichen Verlauf größer wird.

7. Verfahren nach Anspruch 1, **dadurch gekennzeichnet, dass** in Reaktion auf eine erkannte Panikbremsung

- eine im Fahrzeug vorgesehene Warnblinkanlage aktiviert wird und/oder
- der Bremsdruck an den hinteren Rädern begrenzt wird, wobei insbesondere vorgesehen ist, dass

- diese Begrenzung solange aufrecht erhalten wird, bis eine Antiblockierregelung und/oder eine Bremskraftverteilungsregelung an den hinteren Rädern aktiviert wird oder
- eine vorgebbare zweite Zeitdauer überschritten wird oder
- eine vorgebbare Fahrzeugmindestverzögerung unterschritten wird.

8. Vorrichtung zur Erkennung einer Panikbremsung bei einem Kraftfahrzeug mit wenigstens zwei Rädern, wobei Mittel (16) vorgesehen sind, mittels der

- Drehzahlgrößen (Nij) erfasst werden, die die Drehbewegungen wenigstens zweier Räder repräsentieren,
- die Drehzahlgröße ($N_b$) eines der Räder ausgewählt wird und/oder aus den Drehzahlgrößen ein Drehzahlwert ermittelt wird,
- ein die zeitliche Änderung der ausgewählten Drehzahlgröße und/oder des Drehzahlwertes repräsentierender Änderungswert ($a_b$) ermittelt wird,
- der zeitliche Verlauf des Änderungswertes ermittelt wird,
- abhängig von dem zeitlichen Verlauf des Änderungswertes ($a_b$) eine Panikbremsung erkannt wird,
- der Änderungswert ($a_b$) mit einem ersten Schwellenwert (SW1) verglichen wird,

**dadurch gekennzeichnet, dass**

- eine Panikbremsung dann erkannt wird, wenn der Änderungswert ($a_b$) innerhalb einer vorgebbaren ersten Zeitdauer ($\Delta T$) nach dem Unterschreiten des ersten Schwellwertes einen zweiten Schwellenwert (SW2) unterschreitet, wobei der erste Schwellenwert (SW1) größer als der zweite Schwellenwert (SW2) ist.

9. Vorrichtung nach Anspruch 8, **dadurch gekennzeichnet, dass** die Drehzahlgröße eines der Räder derart ausgewählt wird,

- dass als ausgewählte Drehzahlgröße ($N_b$) die Drehzahlgröße des Rades, das die geringste Drehgeschwindigkeit aufweist, ausgewählt wird, und/oder
- dass der Drehzahlwert durch eine Mittelwertbildung aus den Drehzahlgrößen wenigstens zweier Räder ermittelt wird.

**Claims**

1. Method for detecting emergency braking in a motor vehicle having at least two wheels, wherein

- rotational speed variables (Nij) which represent the rotational movements of at least two wheels are acquired,
- the rotational speed variable ($N_b$) of one of the wheels is selected and/or a rotational speed value is determined from the rotational speed variables,
- a change value ($a_b$) which represents the change in the selected rotational speed variable and/or the rotational speed value over time is determined,
- the time profile of the change value is determined,
- emergency braking is detected as a function of the time profile of the change value ($a_b$),
- the change value ($a_b$) is compared with a first threshold value (SW1),

**characterized in that**

- emergency braking is detected when the change value ($a_b$) drops below a second threshold value (SW2) within a predefinable first time period ($\Delta T$) after the first threshold value has been undershot, wherein the first threshold value (SW1) is higher than the second threshold value (SW2).

2. Method according to Claim 1, **characterized in that** the rotational speed variable of one of the wheels is selected in such a way

- that the rotational speed variable of the wheel which has the lowest rotational speed is selected as the selected rotational speed variable ($N_b$), and/or
- **in that** the rotational speed value is determined by forming a mean value from the rotational speed variables of at least two wheels.

3. Method according to Claim 1, **characterized in that** the rotational speed variables are checked for errors, and the rotational speed variables of the wheels at which an error has been detected are excluded from the selection of the rotational speed variable and/or from the determination of the rotational speed value.

4. Method according to Claim 1, **characterized in that** it is detected when the vehicle is travelling along a carriageway with unevennesses of a predefinable degree, and the detection of the emergency braking is deactivated when it is detected that the vehicle is travelling along such a carriageway.

5. Method according to Claim 1, **characterized in that** the vehicle has one engine and at least one wheel is driven by the engine, and not only driven wheels are used to select the selective rotational speed variable ($N_b$) and/or to determine the rotational speed value.

6. Method according to Claim 1, **characterized in that**

- the vehicle has a brake pedal which can be activated by the driver and a brake signal (BLS) which represents the activation of the brake pedal is acquired, and emergency braking is detected only if the brake signal indicates activation of the brake pedal, and/or
- a deceleration variable which represents the deceleration of the entire vehicle is determined, and emergency braking is detected only if the deceleration variable becomes higher over the time profile.

7. Method according to Claim 1, **characterized in that**

- a flashing hazard warning light system which is provided in the vehicle is activated in reaction to detected emergency braking, and/or
- the brake pressure at the rear wheels is limited, wherein in particular there is provision that
- this limitation is maintained until an anti-lock brake control system and/or a braking force distribution control system at the rear wheels is activated

or

- a predefinable second time period is exceeded or

- a predefinable minimum deceleration of the vehicle is undershot.

8. Device for detecting emergency braking in a motor vehicle having at least two wheels, a means (16) are provided by means of which

- rotational speed variables (Nij) which represent the rotational movements of at least two wheels are required,
- the rotational speed variable ($N_b$) of one of the wheels is selected and/or a rotational speed value is determined from the rotational speed variables,
- a change value ($a_b$) which represents the change in the selected rotational speed variable and/or the rotational speed value over time is determined,
- the time profile of the change value is determined,
- emergency braking is detected as a function of the time profile of the change profile ($a_b$),
- the change value ($a_b$) is compared with a first threshold value (SW1),
**characterized in that**
- emergency braking is detected when the change value ($a_b$) drops below a second threshold value (SW2) within a predefinable first time period ($\Delta T$) after the first threshold value has been undershot, wherein the first threshold value (SW1) is higher than the second threshold value (SW2).

9. Device according to Claim 8, **characterized in that** the rotational speed variable of one of the wheels is selected in such a way

- that the rotational speed variable of the wheel which has the lowest rotational speed is selected as the selected rotational speed variable ($N_b$), and/or
- **in that** the rotational speed value is determined by forming mean values from the rotational speed variables of at least two wheels.

**Revendications**

1.  Procédé de détection d'un freinage d'urgence sur un véhicule automobile qui présente au moins deux roues, dans lequel

    - des grandeurs (Nij) de vitesse de rotation qui représentent la vitesse de rotation d'au moins deux roues sont détectées,
    - la grandeur ($N_b$) de vitesse de rotation de l'une des roues est sélectionnée et/ou une valeur de vitesse de rotation est déterminée à partir des grandeurs de vitesse de rotation,
    - une valeur de modification ($a_b$) qui représente la variation temporelle de la grandeur de vitesse de rotation sélectionnée et/ou de la valeur de vitesse de rotation est déterminée,
    - l'évolution temporelle de la valeur de modification est déterminée,
    - un freinage d'urgence est détecté en fonction de l'évolution temporelle de la valeur de modification ($a_b$),
    - la valeur de modification ($a_b$) est comparée à une première valeur de seuil (SW1),

    **caractérisé en ce que**

    - un freinage d'urgence est détecté si à l'intérieur d'une première durée prédéterminée ($\Delta T$) qui suit la descente en dessous de la première valeur de seuil, la valeur de modification ($a_b$) n'atteint plus une deuxième valeur de seuil (SW2), la première valeur de seuil (SW1) étant supérieure à la deuxième valeur de seuil (SW2) .

2.  Procédé selon la revendication 1, **caractérisé en ce que** la grandeur de vitesse de rotation de l'une des roues est sélectionnée
    en sélectionnant comme grandeur sélectionnée de vitesse de rotation ($N_b$) la grandeur de vitesse de rotation de la roue qui présente la plus basse vitesse de rotation et/ou
    en déterminant la valeur de vitesse de rotation par formation de la valeur moyenne des grandeurs de vitesse de rotation d'au moins deux roues.

3.  Procédé selon la revendication 1, **caractérisé en ce qu'**il vérifie la présence d'erreurs sur les grandeurs de vitesse de rotation et **en ce que** les vitesses de grandeur de rotation des roues sur lesquelles une erreur a été détectée sont exclues de la sélection de la grandeur de vitesse de rotation et/ou de la détermination de la valeur de vitesse de rotation.

4.  Procédé selon la revendication 1, **caractérisé en ce qu'**il détecte si le véhicule circule sur une chaussée qui présente des irrégularités d'ampleur prédéterminée et **en ce que** la détection du freinage d'urgence est désactivée s'il est détecté que le véhicule circule sur une telle chaussée.

5.  Procédé selon la revendication 1, **caractérisé en ce que** le véhicule présente un moteur, **en ce qu'**au moins une roue est entraînée par le moteur et **en ce que** seules les roues non entraînées sont utilisées pour sélectionner la grandeur de vitesse de roue sélectionnée ($N_b$) et/ou pour déterminer la valeur de vitesse de roue.

6.  Procédé selon la revendication 1, **caractérisé en ce que**

    - le véhicule présente une pédale de frein apte à être actionnée par le conducteur, un signal de freinage (BLS) qui représente l'actionnement de la pédale de frein étant détecté et un freinage d'urgence étant détecté uniquement si le signal de freinage indique un actionnement de la pédale de frein et/ou
    - une grandeur de ralentissement qui représente le ralentissement de l'ensemble du véhicule est déterminée et le freinage d'urgence est détecté uniquement si l'évolution temporelle de la grandeur de ralentissement présente une augmentation.

7.  Procédé selon la revendication 1, **caractérisé en ce qu'**en réaction à la détection d'un freinage d'urgence

    - une installation de clignotant d'urgence prévue dans le véhicule est activée et/ou
    - la pression de freinage sur les roues arrière est limitée, en prévoyant en particulier
    - de maintenir cette limitation tant qu'une régulation anti-blocage et/ou une régulation de la répartition de la force de freinage sont activées sur les roues arrière ou
    - une deuxième durée prédéterminée est dépassée ou
    - un ralentissement minimum prédéterminé du véhicule n'est pas atteint.

8.  Dispositif de détection d'un freinage d'urgence sur un véhicule automobile doté d'au moins deux roues, qui présente des moyens (16) au moyen desquels :

    - des grandeurs (Nij) de vitesse de rotation qui représentent la vitesse de rotation d'au moins deux roues sont détectées,
    - la grandeur ($N_b$) de vitesse de rotation de l'une des roues est sélectionnée et/ou une valeur de vitesse de rotation est déterminée à partir des grandeurs de vitesse de rotation,
    - une valeur de modification ($a_b$) qui représente la variation temporelle de la grandeur de vitesse de rotation sélectionnée et/ou de la valeur de vitesse de rotation est déterminée,

- l'évolution temporelle de la valeur de modification est déterminée,

- un freinage d'urgence est détecté en fonction de l'évolution temporelle de la valeur de modification ($a_b$) ,

- la valeur de modification ($a_b$) est comparée à une première valeur de seuil (SW1),

**caractérisé en ce que**

- un freinage d'urgence est détecté si à l'intérieur d'une première durée prédéterminée ($\Delta$T) qui suit la descente en dessous de la première valeur de seuil, la valeur de modification ($a_b$) n'atteint plus une deuxième valeur de seuil (SW2), la première valeur de seuil (SW1) étant supérieure à la deuxième valeur de seuil (SW2).

9. Dispositif selon la revendication 8, **caractérisé en ce que** la grandeur de vitesse de rotation de l'une des roues est sélectionnée

en sélectionnant comme grandeur sélectionnée de vitesse de rotation ($N_b$) la grandeur de vitesse de rotation de la roue qui présente la plus basse vitesse de rotation et/ou

en déterminant la valeur de vitesse de rotation par formation de la valeur moyenne des grandeurs de vitesse de rotation d'au moins deux roues.

Fig. 1

Fig. 2

201 — Start

202 — Erfasse Nij

203 — Auswahl Bezugsrad

204 — differenzieren / filtern

205 — $a_b < SW1$ — N

Y

206 — Starte $\Delta T$

208a — Akt. $a_b$

208 — $\Delta T$ abgelaufen — Y

N

207 — $a_b < SW2$

Y

209 — weitere Bedingungen erfüllt? — N

Y

210 — Panikbremsung erkannt

211 — Ende

Fig. 3

$a_b$

SW1

SW2

$\Delta T$

mit Panikbremserkennung

Fahrzeugverzögerungsverlauf

ohne Panikbremserkennung

Raddruckverlauf

a_l

$p\_Hx$ mit Panikbremserkennung

$p\_Hx$ ohne Panikbremserkennung

p_Hx

Panikbremserkennung-Flag

t

EP 1 167 143 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19524939 A
- US 4398260 A